# EUROPEAN PATENT SPECIFICATION

(11) **EP 2 018 358 B1**
(45) Date of publication and mention of the grant of the patent: **21.12.2011**
(21) Application number: 07868273.9
(22) Date of filing: 10.05.2007
(51) Int. Cl.: C04B 35/83, F16D 69/02

(54) **EXTRA LONG LIFE CARBON-CARBON FRICTION MATERIAL**
SEHR LANGE HALTBARES KOHLENSTOFF-KOHLENSTOFF-REIBUNGSMATERIAL
MATÉRIAU DE FRICTION CARBONE-CARBONE À DURÉE DE VIE EXTRA-LONGUE

(30) Priority: 15.05.2006 US 433547
(43) Date of publication of application: 28.01.2009
(73) Proprietor: Honeywell International Inc., Morristown, NJ 07962 (US)
(72) Inventor: WAGHRAY, Akshay, Granger, Indiana 46530 (US); BLUNT, Allan W., Granger, Indiana 46530 (US); WALKER, Terrence B., South Bend, Indiana 46619 (US)
(74) Representative: Buckley, Guy Julian
(86) International application number: PCT/US2007/068623
(87) International publication number: WO 2008/060684

(56) References cited:
- US-A1- 2004 009 113
- US-A1- 2004 074 075

## Description

### FIELD OF THE INVENTION

The present invention relates to the manufacture of carbon-carbon composite materials, and especially to the manufacture of improved aircraft brake discs made of carbon-carbon composite materials.

### BACKGROUND OF THE INVENTION

Long wear life is a desirable property in aircraft landing system components, including brake discs. Currently, many aircraft brake discs are made of carbon-carbon composite materials.

Much effort has gone into the improvement of carbon-carbon composite technology over the years. Some of this technology is reflected in U.S. Pat. No. 5,599,603 (Manufacture of Carbon Fibre Preform), U.S. Pat. No. 5,705,008 (Fiber-Reinforced Carbon and Graphite Articles and Method for the Production Thereof, U.S. Pat. No. 5,803,210 (Disk Brakes), U.S. Pat. No. 6,631,722 B1 (Method of Producing Carbon-Carbon Parts Having Filamentized Composite Fiber Substrates), US 2003/0214064 A1 (Method for Manufacturing Carbon-Carbon Composites), U.S. Pat. No. 6,749,937 B2 (Melt-Infiltrated Pitch-PAN Preforms), U.S. Pat. No. 6,886,668 B2 (Coated Carbon Brake Disc Materials), US 2005/0221051 A1 (Titanium Carbide As a Friction and Wear Modifier in Friction Materials), and US 2006/0008647 A1 (Antioxidant System for Carbon-Carbon Brake Materials with Enhanced Resistance to Humidity Exposure).

U.S. Pat. No. 5,705,008, for instance, pertains to preforms made from thermoset pitch fibers. The patent describes preform heat treatment temperatures in the range of 1200-2200[deg.] C. This patent also teaches final heat treatment processing at high temperatures.

### SUMMARY OF THE INVENTION

The present invention provides a method as defined in claim 1.

The method may include the features of any one or more of dependent claims 2 to 6.

This invention provides C-C composite materials having high modulus carbon fibers, derived from oxidized polyacrylonitrile, and a highly graphitizable, anisotropic pyrocarbon matrix that is not heat-treated. Processing in accordance with this invention provides a C-C composite having adequate friction performance and significantly improved wear life as compared to commercially available C-C composite brake materials.

A typical process for producing carbon-carbon composite brake discs will include: providing textile segments cut in the shape of portions of a wide ring and arranging them, many layers deep, in an annular mold, needling the textile segments together to form a textile matrix preform, placing the textile matrix preform in a furnace, and carbonizing the fibers in the textiles to form a carbon fiber preform, removing the carbonized preform from the furnace and die cutting the preform to establish its geometry, placing the die-cut preform in a CVD/CVI furnace and densifying it, placing the densified brake disc preform into an oven and subjecting it to heat treatment, removing the densified brake disc from the heat-treatment oven and machining drive regions into the disc, and finally coating the carbon-carbon composite brake disc with anti-oxidant.

The present invention moves the heat-treatment step from after CVD/CVI densification to just after carbonization. This high temperature heat treatment, at temperatures equal to or greater than 2400°C, either may be combined with the carbonization step or may be performed in a separate high temperature furnace subsequent to carbonization. It is also possible to combine this heat treatment in a furnace that can be used for CVD/CVI densification. The discs will then be machined to establish geometry subsequent to the densification step. It has unexpectedly been found that conducting the heat treatment at this stage of processing substantially increases the wear life of brake discs made from the carbon-carbon composite produced in this way.

### DETAILED DESCRIPTION OF THE INVENTION

This invention provides a method of making a carbon-carbon composite preform. The method of the invention includes the sequential steps of: (a.) providing a woven or nonwoven polyacrylonitrile textile preform in the shape of a brake disc; (b.) carbonizing the polyacrylonitrile fibers in the preform; (c.) heat-treating the carbonized preform at a temperature of at least 2400°C; and subsequently (d.) densifying the heat-treated preform, for instance by CVI or CVD processing. In accordance with the present invention, no further heat treatment need be performed on the preform in connection with or subsequent to densification processing.

In this method, the preform provided in step (a.) may be for instance a nonwoven fabric preform made of alternating fabric segments having continuous polyacrylonitrile fibers, in which preform half the continuous fibers are oriented in a radial direction with respect to the segment arc bisector and half the continuous fibers are oriented in a chordal direction with respect to the segment arc bisector. This approach to making preforms is described in US 6,691,393 B2, the entire contents of which are expressly incorporated by reference herein. The present invention, however, may be used in the manufacture of fibrous carbon-carbon composite preforms made in any manner.

The polyacrylonitrile fibers carbonization in step (b.) may be conducted at temperatures as low as 1200°C for time periods as low as 4 hours. Typically, however, carbonization is conducted for instance at temperature of 1600°C for a period of 10 hours.

The heat-treatment of the preform in step (c.) in accordance with the present invention is conducted at a temperature in the range 2400°C through 3000°C. A typical example is heat-treatment conducted at a temperature of 2540°C for a period of 4 hours.

Densification step (d.) may be conducted by any conventional process or processes, including those employing synthetic resins, coal tar pitches, and CVD/CVI processing. Typical densification processing is conducted at temperatures of approximately 1000°C.

This invention also provides carbon-carbon composite brake disc preforms having matrices of oxidized polyacrylonitrile fibers, densified by having deposited therein highly graphitizable, anisotropic pyrocarbon, when such brake disc preforms are made by the method described above. A typical carbon-carbon composite brake disc preform of the present invention will incorporate fibers having a Young's modulus of over 300 GN/m².

Yet another embodiment of the present invention is a method of reducing brake disc wear. This wear-reduction method includes the steps of:
(a.) providing a woven or nonwoven PAN textile preform in the shape of a brake disc; (b.) carbonizing the PAN fibers in the preform; (c.) heat-treating the carbonized preform at a temperature of at least 2400°C; and subsequently (d.) densifying the heat-treated preform by CVI or CVD processing. No further heat treatment is performed on this material subsequent to CVI/CVD processing. Finally, this wear-reduction method includes (e.) employing the brake disc manufactured in this way in an aircraft landing system. Using this wear-reduction method of the present invention reduces brake disc wear by at least 25% compared to the brake disc wear that would be provided by a conventionally manufactured brake disc employed under the same conditions.

In accordance with the present invention, textile-based carbon fiber preforms derived from oxidized polyacrylonitrile are heat-treated to a high temperature, e.g. 2540°C. The heat-treated preform is then densified via chemical vapor infiltration (CVI) or chemical vapor deposition (CVD) processing. The densification process may include synthetic or coal tar pitch-based carbons, which are anisotropic. CVD/CVI densification processing is typically carried out at about 1000°C, and deposits anisotropic (rough laminar) highly graphitizable pyrocarbon into the fibrous matrix, thereby increasing the density of the preform. No further heat treatment is performed on this material in accordance with the present invention.

Heat treatment of carbon fibers at temperatures in the range 2400°C through 3000°C raises the Young's modulus (i.e., modulus of elasticity) of the carbon fibers to over 340 GN/m². Similar carbon fibers that are heat treated only at 1600°C have a Young's modulus of less than 260 GN/m².

C-C composite materials produced in accordance with the present invention have relatively long material lives. Their friction properties are serviceable, although not as effective as some more expensive C-C materials. So long as the CVD/CVI densification procedure is carried out below 1400°C, the dramatic wear life improvement provided by the present invention will be obtained. CVD/CVI matrix carbon starts to change from the amorphous state to the crystalline state at 1400°C. Densification temperatures higher than that will accordingly reduce wear life improvement, but may be desirable in some case to achieve desired friction performance for a specific application. The products of this invention are ideal where reduced friction µ can be accommodated and where long brake life is more important than braking distance.

### EXAMPLES

Nonwoven needled preforms are made from segments of polyacrylonitrile-based carbon fiber fabric having radial/chordal configurations, in accordance with the method described in US 6,691,393 B2. The needled preforms are carbonized by heat treatment at 1600°C for 10 hours to form carbon fiber preforms. The carbon fiber preforms are then placed in a high temperature induction furnace and subjected to heat treatment at 2540°C for 4 hours. After this novel heat treatment step, the carbon fiber preforms are densified by conventional CVD/CVI processing to increase their density approximately 3.5 fold. Finally, the densified carbon fiber preforms are machined to their working configuration, treated with antioxidant materials, and charred.

TESTING. For carbon-carbon composite brakes, the landings to wear-out ratio is dependent primarily on the number of brake applications, rather than on the energy absorbed by a brake during each application. For very large aircraft, the brakes may be applied on the order of twenty times per landing cycle. The brakes as applied during landing typically absorb several million foot-pounds of energy for heavy wide-bodied aircraft. This "high speed" brake application is typically at moderate hydraulic pressure (less than about 1500 psi). The balance of the brake applications are "taxi snubs" for steering or low speed braking. They create hydraulic brake fluid pressures generally less than about 1500 psi and absorb about 0.5 million foot-pounds average per snub for wide-bodied aircraft. These taxi snubs account for a significant amount of brake energy temperature buildup. For carbon-carbon composite brakes, taxi snubs account for most of the wear. For testing purposes, a wear sequence was composed of 4 taxi snubs, 1 full taxi stop, a normal energy stop (the high speed braking necessary in conjunction with landing the aircraft), 4 taxi snubs, and 1 taxi stop. For evaluation purposes, no thrust reverse braking assistance was used. Wear rates were derived by measuring total heat sink thickness on the brake at 3000 psi by means of a "wear pin", and translating this into a wear rate based on the number of stop sequences. The following Table shows the results of various comparative test cycles.

**Table**

| Type of brake | Conventional C-C composite | C-C composite of this invention |
|---|---|---|
| | | |
| Embraer ERJ-145 | 34 landing sequences per millimeter wear | 58 landing sequences per millimeter wear |
| | | |
| Embraer ERJ-135 | 29 landing sequences per millimeter wear | 41 landing sequences per millimeter wear |
| | | |
| Boeing 747-400 | 20 landing sequences per millimeter wear | 45 landing sequences per millimeter wear |

## Claims

1. A method of reducing brake disc wear, which method comprises the steps of:
(a.) providing a woven or nonwoven PAN textile preform in the shape of a brake disc;
(b.) carbonizing the PAN fibers in the preform;
(c.) heat-treating the carbonized preform at a temperature of at least 2400°C; and subsequently
(d.) densifying the heat-treated preform by CVI or CVD processing,
wherein no further heat treatment is performed on this material subsequent to CVI/CVD processing, to produce a carbon-carbon composite brake disc preform having a matrix of oxidized polyacrylonitrile fibers having a Young's modulus of over 300 GN/m², said matrix being densified by having deposited therein highly graphitizable, anisotropic pyrocarbon; and
(e.) employing said brake disc in an aircraft landing system,
whereby brake disc wear is reduced by at least 25% compared to the brake disc wear that would be provided by a conventional brake disc employed under the same conditions.

2. The method of reducing brake disc wear of claim 1, wherein the heat-treatment of said preform in step (c.) is conducted at a temperature of 2540°C.

3. The method of reducing brake disc wear of claim 1, wherein the preform provided in step (a.) is a nonwoven fabric preform made of alternating fabric segments having continuous polyacrylonitrile fibers.

4. The method of reducing brake disc wear of claim 1, wherein the polyacrylonitrile fibers are carbonized in step (b.) at temperature of 1600°C for a period of 10 hours.

5. The method of reducing brake disc wear of claim 1, wherein the heat-treatment of said preform in step (c.) is conducted for a period of 4 hours.

6. The method of reducing brake disc wear of claim 1, wherein densification step (d.) is CVD/CVI processing conducted at a temperature of approximately 1000°C.

## Patentansprüche

1. Verfahren zur Bremsscheibenverschleißreduzierung, wobei das Verfahren die Schritte aufweist:
(a.) Bereitstellen eines gewebten oder ungewebten PAN-Textilvorformlings in der Form einer Bremsscheibe;
(b.) Karbonisieren der PAN-Fasern im Vorformling;
(c.) Wärmebehandeln des karbonisierten Vorformlings bei einer Temperatur von mindestens 2400°C; und anschließend
(d.) Verdichten des wärmebehandelten Vorformlings durch CVI- oder CVD-Bearbeitung,
wobei anschließend an die CVI/CVD-Bearbeitung keine weitere Wärmebehandlung an diesem Material durchgeführt wird, um einen Kohlenstoff-Kohlenstoff-Verbundbremsscheibenvorformling zu erzeugen, der eine Matrix von oxidierten Polyacrylnitrilfasern mit einem Elastizitätsmodul von über 300 GN/m² aufweist, wobei die Matrix verdichtet wird, indem darin ein hochgraphitierbarer, anisotropischer Pyrokohlenstoff abgeschieden wird; und
(e.) Einsetzen der Bremsscheibe in einem Flugzeuglandesystem,
wodurch der Bremsscheibenverschleiß im Vergleich zum Bremsscheibenverschleiß um mindestens 25% reduziert wird, der durch eine herkömmliche Bremsscheibe bereitgestellt würde, die unter denselben Bedingungen eingesetzt wird.

2. Verfahren zur Bremsscheibenverschleißreduzierung nach Anspruch 1, wobei die Wärmebehandlung des Vorformlings im Schritt (c.) bei einer Temperatur von 2540°C durchgeführt wird.

3. Verfahren zur Bremsscheibenverschleißreduzierung nach Anspruch 1, wobei der im Schritt (a.) bereitgestellte Vorformling ein Faservliesstoffvorformling ist, der aus abwechselnden Stoffsegmenten hergestellt ist, die durchgehende Polyacrylnitrilfasern aufweisen.

4. Verfahren zur Bremsscheibenverschleißreduzierung nach Anspruch 1, wobei die Polyacrylnitrilfasern im Schritt (b.) für eine Zeitspanne von 10 Stunden bei einer Temperatur von 1600°C karbonisiert werden.

5. Verfahren zur Bremsscheibenverschleißreduzierung nach Anspruch 1, wobei die Wärmebehandlung des Vorformlings im Schritt (c.) für eine Zeitspanne von 4 Stunden durchgeführt wird.

6. Verfahren zur Bremsscheibenverschleißreduzierung nach Anspruch 1, wobei der Verdichtungsschritt (d.) eine CVD/CVI-Bearbeitung ist, die bei einer Temperatur von annährend 1000°C durchgeführt wird.

## Revendications

1. Procédé de réduction de l'usure d'un disque de frein, lequel procédé comprend les étapes consistant à :
(a) se procurer une préforme textile tissée ou non tissée en PAN sous la forme d'un disque de frein ;
(b) carboniser les fibres de PAN dans la préforme ;
(c) traiter thermiquement la préforme carbonisée à une température d'au moins 2400 °C ; puis
(d) densifier la préforme traitée thermiquement par un traitement CVI ou CVD,
dans lequel aucun autre traitement thermique n'est effectué sur ce matériau après le traitement CVI/CVD, pour obtenir une préforme de disque de frein composite carbone-carbone comportant une matrice de fibres de polyacrylonitrile oxydées ayant un module d'Young de plus de 300 GN/m², ladite matrice étant densifiée en y ayant déposé du pyrocarbone anisotrope hautement graphitisable ; et
(e) employer ledit disque de frein dans un système d'atterrissage d'aéronef,
par lequel l'usure du disque de frein est réduite d'au moins 25 % par rapport à l'usure de disque de frein qui serait obtenue par un disque de frein conventionnel employé dans les mêmes conditions.

2. Procédé de réduction de l'usure d'un disque de frein selon la revendication 1, dans lequel le traitement thermique de ladite préforme à l'étape (c) est conduit à une température de 2540 °C.

3. Procédé de réduction de l'usure d'un disque de frein selon la revendication 1, dans lequel la préforme obtenue à l'étape (a) est une préforme de tissu non tissé constituée de segments de tissu alternés comportant des fibres de polyacrylonitrile continues.

4. Procédé de réduction de l'usure d'un disque de frein selon la revendication 1, dans lequel les fibres de polyacrylonitrile sont carbonisées à l'étape (b) à une température de 1600 °C sur une période de 10 heures.

5. Procédé de réduction de l'usure d'un disque de frein selon la revendication 1, dans lequel le traitement thermique de ladite préforme à l'étape (c) est conduit sur une période de 4 heures.

6. Procédé de réduction de l'usure d'un disque de frein selon la revendication 1, dans lequel l'étape de densification (d) est un traitement CVD/CVI conduit à une température d'environ 1000 °C.
